# EUROPÄISCHE PATENTSCHRIFT

(11) **EP 1 294 079 B1**
(45) Veröffentlichungstag und Bekanntmachung des Hinweises auf die Patenterteilung: **15.03.2006**
(21) Anmeldenummer: 02014210.5
(22) Anmeldetag: 26.06.2002
(51) Int. Cl.: H02K 11/00

(54) **Elektromotor mit einem Aufnahmeraum für einen Temperaturfühler**
Electric motor with a seating for a temperature sensor
Moteur électrique avec logement pour capteur de température

(30) Priorität: 14.09.2001 DE 10145570
(43) Veröffentlichungstag der Anmeldung: 19.03.2003
(73) Patentinhaber: Festool GmbH, 73240 Wendlingen (DE)
(72) Erfinder: Schmid, Jürgen, Dipl.-Ing., 88682 Salem (DE); Heppel, Ulrich, Dipl.-Ing., 73272 Neidlingen (DE); Bindig, Bernd, Dipl.-Ing., 73230 Kirchheim (DE)
(74) Vertreter: Reimold, Otto

(56) Entgegenhaltungen:
- EP-A- 0 748 022
- US-A- 4 028 570
- US-A- 4 112 405

## Beschreibung

Die Erfindung betrifft einen Elektromotor mit einem Stator, der mindestens eine Statorwicklung aus elektrisch leitendem Drahtmaterial aufweist, an der eine Anlagewand, insbesondere aus elektrisch isolierendem Material, anliegt, in deren Bereich ein von außen her zugänglicher Aufnahmeraum länglicher Gestalt zum Einstecken eines Temperaturfühlers in Längsrichtung des Aufnahmeraums angeordnet ist, wobei der Aufnahmeraum einerseits von der Statorwicklung und andererseits von einer zur Statorwicklung beabstandeten Wandpartie der Anlagewand begrenzt wird und mindestens über einen Teil seiner Länge eine sich in Längsrichtung von außen nach innen verjüngende Gestalt aufweist.

Beim Betrieb einer mit einem Elektromotor ausgestatteten Maschine, beispielsweise eine Handwerkzeugmaschine, können sich Motortemperaturen ergeben, die einen zulässigen Wert überschreiten.

Um eine solche Überhitzung zu vermeiden, wird üblicherweise ein Temperaturfühler, insbesondere in Gestalt eines Thermoelements oder eines PTC, verwendet, der mit einer beim Erreichen der zulässigen Höchsttemperatur die Motorenleistung beschränkenden oder den Elektromotor ausschaltenden Steuerschaltung zusammenwirkt.

Bei einem aus der DE 198 59 011 C1 bekannten Elektromotor der eingangs genannten Art wird der den Temperaturfühler aufnehmende Aufnahmeraum von einem zylindrischen, rohrförmigen Aufnahmekörper gebildet, der vor dem wickeln der Statorwicklung an einer der Statorwicklung benachbarten Anlagewand eingeklipst wird. Nach dem Wickelvorgang kann der Temperaturfühler in den Aufnahmekörper eingesteckt werden.

Das Einbinden des Aufnahmekörpers in die Statorwicklung bringt montagetechnische Schwierigkeiten mit sich. Auch das vorherige Einsetzen des Aufnahmekörpers ist mit einem gewissen Aufwand verbunden. Ferner besteht die Gefahr, dass sich der Aufnahmekörper beim Wickelvorgang verlagert, so dass sich der Ort, an dem die Temperatur gemessen wird, verändert. Des Weiteren sitzt der Temperaturfühler verhältnismäßig lose in dem Aufnahmekörper, so dass er beim Betrieb der den Elektromotor enthaltenden Maschine verrutschen kann.

Ferner geht aus der US-A-4 112 405 ein Elektromotor der eingangs genannten Art hervor, bei dem der Aufnahmeraum seitlich durch von außen nach innen geneigt aufeinander zu verlaufende Randbereiche begrenzt wird, so dass der Aufnahmeraum eine sich in der Ebene der Anlagewand von außen nach innen verjüngende Gestalt aufweist.

Der vorliegenden Erfindung liegt die Aufgabe zu Grunde, einen Elektromotor der eingangs genannten Art zu schaffen, bei dem der mit dem Fixieren des Temperaturfühlers verbundene Aufwand gering ist und der Temperaturfühler sicher an Ort und Stelle hält.

Diese Aufgabe wird erfindungsgemäß dadurch gelöst, dass sich der Aufnahmeraum durch Verringern des Abstandes zwischen der Statorwicklung und der zu dieser beabstandeten Wandpartie von außen nach innen verjüngt, so dass der Temperaturfühler beim Einstecken unter Abstützen an der Anlagewand in Berührkontakt mit der Statorwicklung gelangt und zwischen der Statorwicklung und der zu dieser beabstandeten Wandpartie festgeklemmt wird.

Auf diese Weise ist für die Aufnahme des Temperaturfühlers kein zusätzliches Bauteil erforderlich. Der Temperaturfühler wird nach dem Wickeln einfach zwischen die genannte Wandpartie der Anlagewand und die vorbeilaufende Statorwicklung gesteckt, wobei sich der Aufnahmeraum durch entsprechende Formgebung der Anlagewand ergibt, und zwar so, dass er sich nach innen hin verjüngt, so dass der eingesteckte Temperaturfühler festgeklemmt ist.

Somit kann der Wickelvorgang wie üblich ohne Rücksichtnahme auf einen Aufnahmekörper durchgeführt werden. Ferner ergibt sich durch die genaue Positionierung eine gute Reproduzierbarkeit der thermischen Kontaktierung und somit des thermischen Übergangswiderstandes. Dabei wird der Vorteil der bekannten Anordnung beibehalten, dass der Temperaturfühler nachträglich, wenn die Statorwicklung fertig ist, eingesteckt wird, so dass er schon vorher mit der Steuerschaltung verbunden werden kann. Des Weiteren kann der Temperaturfühler, sollte er defekt sein, ohne Schwierigkeiten ausgetauscht werden.

Zweckmäßigerweise bildet die den Aufnahmeraum begrenzende Wandpartie eine rinnenartige Vertiefung, die mindestens über einen Teil ihrer Länge eine von außen nach innen hin abnehmende Tiefe aufweist, wobei sich die Statorwicklung über die Vertiefung hinweg erstreckt. Dabei kann das die Statorwicklung bildende Drahtmaterial quer zur Längsrichtung des Aufnahmeraums an diesem vorbei verlaufen. Auf diese Weise stehen der eingesteckte Temperaturfühler und das vorbei verlaufende Drahtmaterial im Wesentlichen rechtwinkelig zueinander, was hinsichtlich der Rückhaltekraft, mit der der Temperaturfühler im Aufnahmeraum festgehalten wird, von Vorteil ist.

Zweckmäßigerweise wird die den Aufnahmeraum begrenzende Wandpartie von einem in Richtung der Rotationsachse des Elektromotors endseitigen Endstück des Stators gebildet, an dem die Statorwicklung umgelenkt ist, so dass ein Wickelkopf gebildet wird, wobei der Aufnahmeraum im Wesentlichen parallel zur Rotationsachse neben dem Wickelkopf verläuft.

Solche Stator-Endstücke aus elektrisch isolierendem Material sind bei Elektromotoren ohnehin üblich, so dass für die den Aufnahmeraum begrenzende Wandpartie kein zusätzliches Teil geschaffen werden muss.

Ein Ausführungsbeispiel der Erfindung wird nun anhand der Zeichnung beschrieben. Es zeigen:
- Figur 1: den Stator eines Elektromotors in schematischer Stirnansicht und
- Figur 2: den Stator nach Figur 1 im Längsschnitt in Teildarstellung gemäß der Schnittlinie II-II.

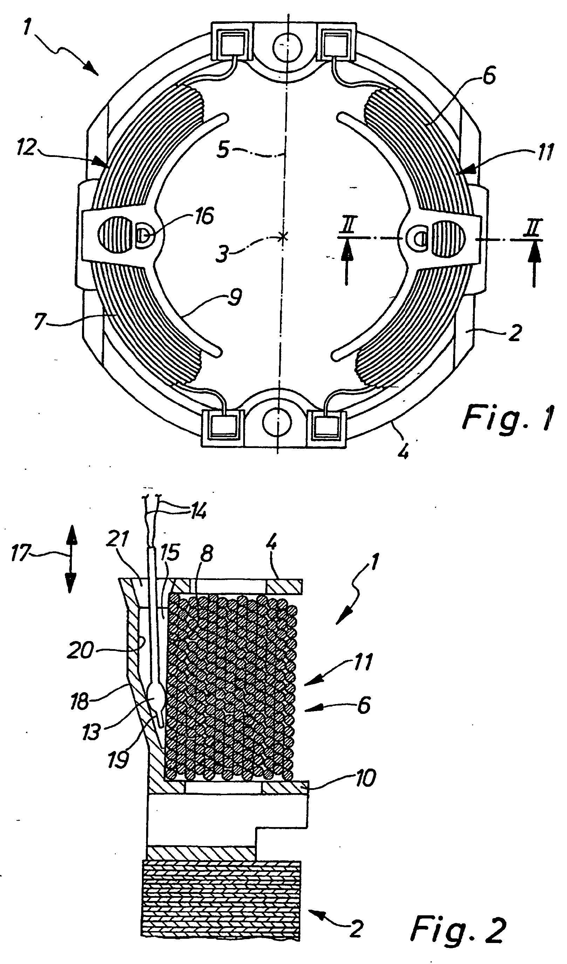

Ein Elektromotor beispielsweise einer Handwerkzeugmaschine weist einen Stator 1 auf, der in üblicher Weise eine Blechpaketanordnung 2 und an seinen beiden auf der Rotationsachse 3 des Motors liegenden Enden jeweils ein Endstück 4 aus elektrisch isolierendem Material enthält. In der Zeichnung ist nur eines der beiden Endstücke dargestellt. Am entgegengesetzten Ende des Stators liegen gleiche oder ähnliche Verhältnisse vor. Die Figur 2 zeigt den Stator 1 nur teilweise soweit es für das Verständnis der Erfindung erforderlich ist, wobei nur die in der Schnittebene liegenden Teile gezeigt und die hinter der Schnittebene verlaufenden Linien weggelassen sind. Der Stator 1 ist mit Bezug auf die zur Schnittlinie II-II rechtwinkelige, durch die Rotationsachse 3 gehende Längsebene 5 spiegelsymmetrisch. Eine der Figur 2 entsprechende Anordnung liegt daher auch jenseits der Längsebene 5 vor.

Die beiden Endstücke 4 sind in an sich bekannter Weise mit der Blechpaketanordnung 2 verbunden.

Der Stator 1 weist ferner für jeden Pol (im dargestellten Falle handelt es sich um einen zweipoligen Stator) eine von elektrisch leitendem Drahtmaterial gebildete Statorwicklung 6 bzw. 7 auf, die sich in Figur 1 senkrecht zur Zeichenebene erstreckt. In Stirnansicht (Figur 1) weisen die Statorwicklungen 6, 7 eine bogenförmige Gestalt auf. Dabei liegen sie bei jedem Endstück 4 radial innen an einer entsprechend bogenförmigen Endstück-Anlagewand 8 bzw. 9 an und sind um eine quer zur Rotationsachse 3 stehende Endstück-Stützwand 10 geführt, so dass jeweils ein Wickelkopf 11 bzw. 12 gebildet wird.

Der Aufbau solcher Statoren und das Wickeln der Statorwicklungen ist allgemein bekannt, so dass sich weitere allgemeine Ausführungen erübrigen.

Zur Vermeidung einer Überhitzung des Elektromotors beim Betrieb wird ein Temperaturfühler 13 insbesondere in Gestalt eines Thermoelements oder PTC verwendet, dessen Anschlussdrähte 14 mit einer nicht dargestellten Steuerschaltung verbunden sind, die beim Auftreten einer zu großen Temperatur die Motorleistung herabsetzt oder den Elektromotor abschaltet.

Der Temperaturfühler 13 wird in Berührkontakt mit einer der Statorwicklungen 6, 7 gebracht. Hierzu weist der Stator 1 im - Bereich jeder Anlagewand 8, 9 einen von außen her zugänglichen Aufnahmeraum 15 bzw. 16 länglicher Gestalt auf, in den der Temperaturfühler 13 in Längsrichtung 17 des Aufnahmeraums eingesteckt werden kann. In Figur 2 ist der Temperaturfühler 13 in den Aufnahmeraum 15 gesteckt, so dass nachstehend nur auf diesen Bezug genommen wird. Es versteht sich, dass der andere Aufnahmeraum 16 auch fehlen oder dass man in beide Aufnahmeräume jeweils einen Temperaturfühler einstecken könnte.

Der Aufnahmeraum 15 wird einerseits von der betreffenden Statorwicklung 6 und andererseits von einer zur Statorwicklung 6 beabstandeten Wandpartie 18 der Anlagewand 8 begrenzt, wobei der Aufnahmeraum 15 mindestens über einen Teil seiner Länge eine sich in Längsrichtung 17 von außen nach innen verjüngende Gestalt aufweist, so dass ein im Schnitt keilartiger Bereich 19 gebildet wird. Gelangt der Temperaturfühler 13 beim Einstecken in den Aufnahmeraum 15 in den sich verjüngenden Bereich 19, gelangt er unter Abstützen an der Wandpartie 18 in Berührkontakt mit der Statorwicklung 6. Der Temperaturfühler 13 verkeilt sich sozusagen in der Tasche 19. Dabei ist die Anordnung im Falle des Ausführungsbeispiels so getroffen, dass die den Aufnahmeraum 15 begrenzende Wandpartie 18 eine rinnenartige Vertiefung 20 bildet, deren quer zur Längsrichtung 17 gerichtete Tiefe von außen nach innen hin abnimmt, so dass der sich verjüngende Bereich 19 gebildet wird. Die Statorwicklung 6 erstreckt sich über die Vertiefung 20 hinweg und liegt beiderseits der Vertiefung 20 an der Anlagewand 8 an.

In jedem Falle ist es vorteilhaft, dass das die Statorwicklung 6 bildende Drahtmaterial quer zur Längsrichtung 17 des Aufnahmeraums 15 an diesem vorbei verläuft, so dass sozusagen ein gewisses Verhaken des Temperaturfühlers 13 stattfinden kann.

Die den Aufnahmeraum 15 begrenzende Wandpartie 18 wird von dem betreffenden Endstück 4 des Stators 1 gebildet. Die die Wandpartie 18 ergebende Vertiefung 20 lässt sich bei der Herstellung des Endstücks 4 ohne Weiteres einformen. Die Einsteckmündung 21 des Aufnahmeraums 15 ist an der Stirnseite des Endstücks 4 angeordnet, so dass sich der Aufnahmeraum 15, d.h. dessen Längsrichtung 17, im Wesentlichen parallel zur Rotationsachse 3 neben dem Wickelkopf 11 verläuft.

## Patentansprüche

1. Elektromotor mit einem Stator, der mindestens eine Statorwicklung aus elektrisch leitendem Drahtmaterial aufweist, an der eine Anlagewand, insbesondere aus elektrisch isolierendem Material, anliegt, in deren Bereich ein von außen her zugänglicher Aufnahmeraum länglicher Gestalt zum Einstecken eines Temperaturfühlers in Längsrichtung des Aufnahmeraums angeordnet ist, wobei der Aufnahmeraum (15 bzw. 16) einerseits von der Statorwicklung (6 bzw. 7) und andererseits von einer zur Statorwicklung beabstandeten Wandpartie (18) der Anlagewand (8 bzw. 9) begrenzt wird und mindestens über einen Teil seiner Länge eine sich in Längsrichtung (17) von außen nach innen verjüngende Gestalt aufweist, **dadurch gekennzeichnet, dass** sich der Aufnahmeraum (15 bzw. 16) durch Verringern des Abstands zwischen der Statorwicklung (6 bzw. 7) und der zu dieser beabstandeten Wandpartie (18) von außen nach innen verjüngt, so dass der Temperaturfühler (13) beim Einstecken unter Abstützen an der Wandpartie (18) in Berührkontakt mit der Statorwicklung (6 bzw. 7) gelangt und zwischen der Statorwicklung (6 bzw. 7) und der zu dieser beabstandeten Wandpartie (18) festgeklemmt wird.

2. Elektromotor nach Anspruch 1, **dadurch gekennzeichnet, dass** die den Aufnahmeraum (15 bzw. 16) begrenzende Wandpartie (18) eine rinnenartige Vertiefung (20) bildet, die mindestens über einen Teil ihrer Länge eine von außen nach innen hin abnehmende Tiefe aufweist, wobei sich die Statorwicklung (6 bzw. 7) über die Vertiefung (20) hinweg erstreckt.

3. Elektromotor nach Anspruch 1 oder 2, **dadurch gekennzeichnet, dass** das die Statorwicklung (6 bzw. 7) bildende Drahtmaterial quer zur Längsrichtung (17) des Aufnahmeraums (15 bzw. 16) an diesem vorbei verläuft.

4. Elektromotor nach Anspruch 3, **dadurch gekennzeichnet, dass** die den Aufnahmeraum (15 bzw. 16) begrenzende Wandpartie (18) von einem in Richtung der Rotationsachse (3) des Elektromotors endseitigen Endstück (4) des Stators (1) gebildet wird, an dem die Statorwicklung (6 bzw. 7) umgelenkt ist, so dass ein Wickelkopf (11 bzw. 12) gebildet wird, wobei der Aufnahmeraum (15 bzw. 16) im Wesentlichen parallel zur Rotationsachse (17) neben dem Wickelkopf (11 bzw. 12) verläuft.

## Revendications

1. Moteur électrique ave un stator qui présente au moins un enroulement de stator dans un matériau en fil conducteur électrique, sur lequel s'appuie une paroi d'appui, en particulier en matériau isolant électrique, au niveau de laquelle un logement accessible de l'extérieur et de forme oblongue est prévu pour insérer un capteur de température dans la direction longitudinale du logement, dans lequel le logement (15, resp. 16) est délimité d'une part par l'enroulement de stator (6, resp. 7) et d'autre part par une partie de paroi (18) de la paroi d'appui (8, resp. 9) espacée de l'enroulement de stator et présente sur au moins une partie de sa longueur une forme effilée de l'extérieur vers l'intérieur dans la direction longitudinale (17), **caractérisé en ce que** le logement (15, resp. 16) est effilé de l'extérieur vers l'intérieur par réduction de la distance entre l'enroulement de stator (6, resp. 7) et la partie de paroi (18) espacée de celui-ci, de sorte que, lors de son insertion, le capteur de température (13) entre en contact avec l'enroulement de stator (6, resp. 7) en s'appuyant contre la partie de paroi (18) et est coincé entre l'enroulement de stator (6, resp. 7) et la partie de paroi (18) espacée de celui-ci.

2. Moteur électrique selon la revendication 1, **caractérisé en ce que** la partie de paroi (18) limitant le logement (15, resp. 16) forme un renfoncement (20) en forme de rainure, qui présente sur au moins une partie de sa longueur une profondeur décroissante de l'extérieur vers l'intérieur, l'enroulement de stator (6, resp. 7) s'étendant au-delà du renfoncement (20).

3. Moteur électrique selon la revendication 1 ou 2, **caractérisé en ce que** le matériau en fil formant l'enroulement de stator (6, resp. 7) s'étend transversalement à la direction longitudinale (17) du logement (15, resp. 16) en passant devant celui-ci.

4. Moteur électrique selon la revendication 3, **caractérisé en ce que** la partie de paroi (18) limitant le logement (15, resp. 16) est formée par un bout (4) du stator (1) dans la direction de l'axe de rotation (3) du moteur électrique au niveau duquel l'enroulement de stator (6, resp. 7) est renvoyé, de sorte qu'une tête d'enroulement (11, resp. 12) est formée, le logement (15, resp. 16) s'étendant pour l'essentiel parallèlement à l'axe de rotation (17) à côté de la tête d'enroulement (11, resp. 12).

## Claims

1. Electric motor with a stator which has at least one stator winding of electrically conductive wire material, against which lies an attachment wall, in particular of electrically insulating material, in the area of which is provided an elongated mounting space, accessible from the outside, for the insertion of a temperature sensor in the axial direction of the mounting space, wherein the mounting space (15 and 16 respectively) is bounded on one side by the stator winding (6 and 7 respectively) and on the other side by a wall section (18) of the attachment wall (8 and 9 respectively) at a distance from the stator winding, and has a shape which tapers in the axial direction (17) from the outside to the inside over a part of its length, **characterised in that** the mounting space (15 and 16 respectively) is tapered from the outside to the inside by reducing the space between the stator winding (6 and 7 respectively) and the wall section (18) at a distance from it, so that on insertion the temperature sensor (13), with support at the wall section (18), makes physical contact with the stator winding (6 and 7 respectively) and is clamped between the stator winding (6 and 7 respectively) and the wall section (18) at a distance from it.

2. Electric motor according to claim 1, **characterised in that** the wall section (18) bounding the mounting space (15 and 16 respectively) forms a channel-like recess (20) with a depth reducing from the outside to the inside over at least part of its length, while the stator winding (6 and 7 respectively) extends beyond the recess (20).

3. Electric motor according to claim 1 or 2, **characterised in that** the wire material forming the stator winding (6 and 7 respectively) runs past the mounting space (15 and 16 respectively) and at right-angles to the longitudinal axis (17) of the latter.

4. Electric motor according to claim 3, **characterised in that** the wall section (18) bounding the mounting space (15 and 16 respectively) is formed by an end section (4) of the stator (1) at the end towards the rotation axis (3) of the electric motor, at which the stator winding (6 and 7 respectively) is turned back to form an end winding (11 and 12 respectively), while the mounting space (15 and 16 respectively) runs substantially parallel to the rotation axis (17) alongside the end winding (11 and 12 respectively).
